# EUROPÄISCHE PATENTANMELDUNG

(11) **EP 0 770 892 A1**
(43) Veröffentlichungstag der Anmeldung: **02.05.1997**
(21) Anmeldenummer: 96810104.8
(22) Anmeldetag: 23.02.1996
(51) Int. Cl.: G02B 6/38

(54) **Steckverbinder für Lichtwellenleiter mit einer Schutzkappe**

(30) Priorität: 28.10.1995 DE 19540353
(71) Anmelder: HUBER & SUHNER AG KABEL-, KAUTSCHUK-, KUNSTSTOFF-WERKE, 9100 Herisau (CH)
(72) Erfinder: Schmalzigaug, Thomas, Dipl.-Ing. HTL/FWT, 9016 St. Gallen (CH)
(74) Vertreter: Schick, Carl

(57) **Zusammenfassung**

Der Steckverbinder für Lichtwellenleiter umfasst einen Stecker (1) und eine Schutzkappe (5). Aus der Stirnfläche des Steckers (1) ragt ein Steckerstift (2) bis zu einem ersten mittleren Abstand (AB) konzentrisch heraus. Die Endfläche (4) des Steckerstifts (2) ist als schräge Fläche im Bereich der optischen Achse (3) des Steckverbinders ausgebildet. Im Bereich der optischen Achse (3) weist die Schutzkappe (5) eine innere schräge Wirkfläche (7) auf, die sich in einem zweiten mittleren Abstand (BC) von der Stirnfläche des Steckerstifts (2) befindet. Die Schutzkappe (5) weist eine äußere schräge Wirkfläche (6) mit einer Verspiegelung (9) im Bereich der optischen Achse (3) auf und besteht aus einem transparenten Material. Dadurch kann erreicht werden, daß von den Wirkflächen (7, 6) nur ein kleiner Teil des vor allem diffus gestreuten Lichtes in den Stecker (1) zurück gelangt.

## Beschreibung

Die vorliegende Erfindung betrifft einen Steckverbinder für Lichtwellenleiter mit einem Stecker und einer Schutzkappe.

Bei Sendemodulen von analogen Systemen mit Laserdioden darf der Anteil des zurückgestreuten Lichtes nur sehr klein sein, damit das Sendeelement nicht gestört wird. Der Anteil des zurückgestreuten Lichtes muß einen höheren Wert als 55dB aufweisen. Das Verhältnis von zurückgestreutem zu eingespeiste Licht wird Rückflußdämpfung genannt. Die genaue Definition der Rückflußdämpfung ist beispielsweise aus der Norm CECC 86'000 bzw. EN 186'000-1 allgemein bekannt.

Bei einem Steckverbinder der eingangs erwähnten Art besteht das Problem, daß nicht nur im gesteckten Zustand, sondern auch im ungesteckten Zustand eine relativ hohe Rückflußdämpfung erwünscht ist. Die hohe Rückflußdämpfung ergibt sich im ersten Fall aus der Oberflächengeometrie und Beschaffenheit des gesteckten Steckerstiftes, im ungesteckten Zustand aus dem Design der Schutzkappe. Je nach Typ des Steckverbinders können allerdings die Abmessungen und andere Faktoren die Gestaltungsmöglichkeiten der Schutzkappe erheblich einschränken.

Diese Aufgabe wird erfindungsgemäß durch einen Steckverbinder nach dem kennzeichnenden Teil des Anspruchs 1 gelöst.

Ein solcher Steckverbinder stellt eine technisch kostengünstige Lösung dar, mit der die oben genannten Forderungen erfüllt werden können.

Weitere vorteilhafte Ausführungen der Erfindung sind in den abhängigen Ansprüchen angegeben.

Nachfolgend wird die Erfindung beispielsweise anhand einer Zeichnung näher erläutert.

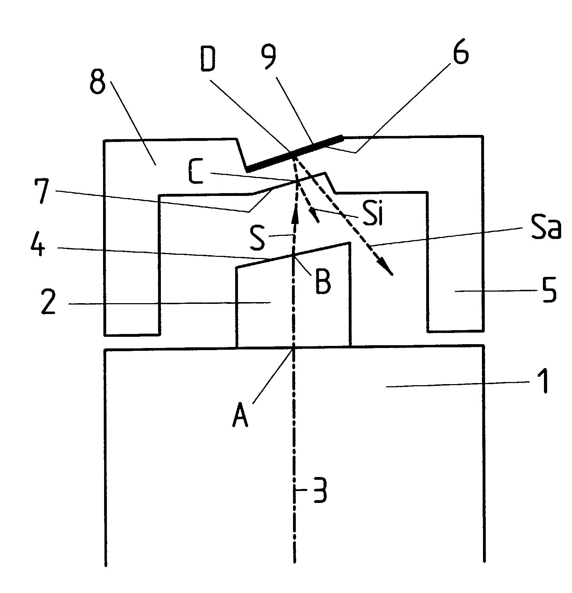

Die einzige Figur zeigt eine schematische Darstellung eines Steckverbinders nach der Erfindung.

In der Figur ist ein Stecker 1 dargestellt, aus dessen Stirnfläche ein konzentrisch angeordneter Steckerstift 2 bis zu einem relativ kleinen mittleren Abstand AB herausragt. Der Steckerstift 2 weist eine als schräge Kreisfläche bezüglich der optischen Achse 3 des Steckverbinders ausgebildete stirnseitige Endfläche 4 auf. Wie aus der Figur ersichtlich liegt die Längsachse des Lichtwellenleiters auf der optischen Achse 3.

Konkav an der Stirnfläche des Steckers 1 ist eine flache, platzsparende Schutzkappe 5 mit einer kleinen Tiefe beispielsweise von 1,7 mm konzentrisch angeordnet. Der Stekkerstift 2 befindet sich im konkaven Innenraum der Schutzkappe 5, die somit im Bereich des Lichtauftreffgebiets geometrisch angepaßt ist. Im Bereich der optischen Achse 3 des Steckverbinders weist die Schutzkappe 5 außenseitig eine äußere Wirkzone 6 und innenseitig eine innere Wirkzone 7 auf. Die Wirkzonen 6 und 7 werden auch Wirkflächen genannt und sind vorzugsweise kreisförmig als schräge Vertiefungen beidseitig des Bodens 8 der Schutzkappe 5 ausgebildet. Die Oberfläche der Wirkzonen 6 und 7 soll möglichst plan bzw. eben sein, so daß ein großer Anteil des Lichtes in eine Richtung reflektiert wird. Für eine kleine Rückführung des Lichtes in die Faser müssen sich die Wirkflächen möglichst weit von der Endfläche 4 des Steckerstiftes befinden, da die Oberflächenstrukturen der Wirkflächen immer einen Anteil an diffuser Streuung verursachen und damit die Rückflußdämpfung herabsetzen.

Die Schutzkappe 5 besteht aus einem transparenten Material der Klasse Thermoplast. Zusätzlich wird die äußere Wirkfläche 6 außenseitig durch eine Beschichtung 9 verspiegelt. Die Verspiegelung kann galvanisch, durch bedampfen, bespritzen, lackieren oder plattieren aufgebracht werden. Als Materialien kommen solche mit hohen Reflexionsgraden im Bereich der Wellenlängen von 850 bis 1550 nm, wie Metallreflexionsschichten und dielektrische Spiegelschichten in Frage.

An der inneren Wirkfläche 7 wird nur ein kleiner Anteil Si, beispielsweise 4%, des sich längs der optischen Achse 3 fortpflanzenden Lichtes S reflektiert. An der äußeren Wirkfläche 6 wird der Rest Sa des Lichtes, beispielsweise 96%, an der Innenseite der Beschichtung 9 schräg reflektiert. Gemäß diesem optimierten Prinzip kann erreicht werden, daß von den beispielsweise im Bereich von BC = 0,2 bis 0,6 mm entfernten Wirkflächen nur ein kleiner Teil des - vor allem diffus gestreuten - Lichtes in den Lichtwellenleiter bzw. in den Stecker 1 zurückgestreut wird. Mit den Bezugszeichen Si und Sa wird nur auf die Achsenlichtstrahlen hingewiesen.

Eine etwas schlechtere Lösung ergibt sich dadurch, daß die innere Wirkfläche 7 verspiegelt ist und das Material aus opakem Kunststoff besteht. Die kürzeren Abstände zwischen der Wirkfläche 7 und der Endfläche 4 bewirken eine kleinere Rückflußdämpfung als bei der Variante mit der äußeren Verspiegelung 9.

Wie aus der Figur ersichtlich wird der Strahl S derart im Bereich D bzw. C reflektiert, daß sich der Strahl Sa bzw. Si in einer möglichst großen Entfernung vom Punkt B fortpflanzt.

Vorzugsweise kann die Schutzkappe 5 einen flachen U-förmigen Querschnitt, wie in der Figur dargestellt, aufweisen.

## Patentansprüche

1. Steckverbinder für Lichtwellenleiter mit einem Stecker und einer Schutzkappe, dadurch gekennzeichnet, daß aus der Stirnfläche des Steckers (1) ein Steckerstift (2) bis zu einem ersten Abstand (AB) herausragt, daß die Schutzkappe (5) mindestens eine schräge Fläche (7; 6) im Bereich der optischen Achse (3) aufweist, daß sich diese schräge Fläche (7; 6) in einem zweiten Abstand (BC; BD) von der Endfläche des Steckerstifts (2) befindet, und daß diese schräge Fläche (7; 6) verspiegelt ist.

2. Steckverbinder nach Anspruch 1, dadurch gekennzeichnet, daß die Schutzkappe (5) aus einem opakem Kunststoff besteht und daß die schräge Fläche (7) innenseitig (C) an der Schutzkappe (5) gebildet und verspiegelt ist.

3. Steckverbinder nach Anspruch 1, dadurch gekennzeichnet, daß die Schutzkappe (5) aus einem transparenten Material besteht und daß die schräge Fläche (6) außenseitig (D) an der Schutzkappe (5) im Bereich der optischen Achse (3) gebildet ist.

4. Steckverbinder nach Anspruch 3, dadurch gekennzeichnet, daß die äußere schräge Fläche (6) durch eine Beschichtung (9) verspiegelt ist.

5. Steckverbinder nach Anspruch 2 oder 4, dadurch gekennzeichnet, daß diese Beschichtung (9) durch eine Metallreflexionsschicht oder eine dielektrische Spiegelschicht gebildet ist.

6. Steckverbinder nach einem der Ansprüche 1 bis 5, dadurch gekennzeichnet, daß die Endfläche (4) des Stekkerstifts (2) als schräge Fläche im Bereich der optischen Achse (3) des Steckverbinders ausgebildet ist.

7. Steckverbinder nach einem der Ansprüche 1 bis 6, dadurch gekennzeichnet, daß die schräge(n) Fläche(n) (7; 6) der Schutzkappe (5) plan ausgeführt ist (sind).

8. Steckverbinder nach einem der Ansprüche 1 bis 7, dadurch gekennzeichnet, daß die schräge(n) Fläche(n) (7; 6) derart orientiert ist (sind), daß sich die dort reflektierenden Strahlen (Si; Sa) in einem Abstand vom optischen Zentrum (B) der Endfläche des Steckerstifts (2) fortpflanzen.

9. Steckverbinder nach einem der Ansprüche 1 bis 8, dadurch gekennzeichnet, daß die Beschichtung (9) aus einem Material mit hohen Reflexionsgraden im Bereich der Wellenlängen von 850 bis 1550 nm gebildet ist.

10. Steckverbinder nach einem der Ansprüche 1 bis 9, dadurch gekennzeichnet, daß der zweite Abstand (BC; BD) im Bereich zwischen 0,2 und 0,6 mm liegt.
